# FASCICULE DE BREVET EUROPEEN

(11) **EP 3 934 115 B1**
(45) Date de publication et mention de la délivrance du brevet: **13.09.2023**
(21) Numéro de dépôt: 21181344.9
(22) Date de dépôt: 24.06.2021
(51) Int. Cl.: H04B 3/58, H04L 12/46, H04B 3/54, H04L 12/00, H04W 40/02, H04W 40/22, H04W 40/28

(54) **PROCÉDÉ ET DISPOSITIF DE RELAI D'UN MESSAGE REÇU D'UN PREMIER DISPOSITIF PAR UN DEUXIÈME DISPOSITIF NOEUD VERS UN TROISIÈME DISPOSITIF NOEUD**
VERFAHREN UND VORRICHTUNG ZUR WEITERLEITUNG EINER VON EINER ERSTEN VORRICHTUNG EMPFANGENEN NACHRICHT DURCH EINE ZWEITE KNOTENVORRICHTUNG AN EINE DRITTE KNOTENVORRICHTUNG
METHOD AND DEVICE FOR RELAYING A MESSAGE RECEIVED FROM A FIRST DEVICE BY A SECOND NODE DEVICE TO A THIRD NODE DEVICE

(30) Priorité: 01.07.2020 FR 2006936
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); ROTER, Ziv, 92500 RUEIL MALMAISON (FR)
(74) Mandataire: Cabinet Le Guen Maillet

(56) Documents cités:
- WO-A1-2010/017549
- US-B2- 8 995 437

## Description

### DOMAINE TECHNIQUE

La présente invention concerne un procédé et un dispositif de relai d'un message reçu d'un premier dispositif noeud par un deuxième dispositif noeud vers un troisième dispositif noeud.

### ETAT DE LA TECHNIQUE ANTERIEURE

Les communications par courants porteurs en ligne PLC (« PowerLine Communications » en anglais) se développent, notamment dans le cadre des réseaux d'alimentation électrique de type AMM (« Automated Meter Management » en anglais). Des réseaux de communication sont ainsi implémentés au-dessus de réseaux d'alimentation électrique pour la collecte automatisée pas un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeud (notamment concentrateurs de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL) du modèle OSI. La norme G3-PLC est destinée à être exploitée dans des bandes fréquentielles allant de 10-490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va aussi approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, portée, résistance aux perturbateurs, etc.

Toutefois, la norme G3-PLC ne permet l'utilisation que d'une seule desdites bande fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle.

Dans une évolution de la norme G3-PLC un canal RF (acronyme de radio-fréquence) peut être utilisé à la place d'une desdites bandes fréquentielles CPL. Dans la suite du document, les termes « bande fréquentielle » désignent indifféremment une bande fréquentielle CPL ou un canal RF.

Le brevet US 8995 437 B2 divulgue la transmission de trames segmentées dans un réseau PLC et la demande de brevet WO 2010/017549 A1 divulgue l'utilisation de différentes bandes de fréquence dans un réseau de communication.

Or, les besoins en termes de ressources des réseaux de communication, notamment dans le déploiement des réseaux d'alimentation électrique de type AMM, grandissent de jour en jour. La bande fréquentielle pour laquelle les éléments constitutifs d'un réseau ont été certifiés peut se retrouver en limite de capacité, ce qui fait obstacle à une augmentation du nombre d'échanges dans le réseau, par exemple pour introduire de nouvelles fonctionnalités ou encore de nouveaux besoins applicatifs, par exemple.

### EXPOSE DE L'INVENTION

A cette fin, selon un premier aspect, l'invention propose un procédé de relai d'un message fragmenté selon la revendication 1.

L'invention concerne aussi un dispositif de relai d'un message selon la revendication 8.

Ainsi, la latence de la transmission de message liée à l'utilisation d'une unique bande fréquentielle pour une zone géographique donnée est grandement réduite et la présente invention permet de faire coexister des dispositifs noeuds qui sont aptes ou non à émettre et recevoir des messages dans au moins deux bandes fréquentielles différentes.

Un produit programme d'ordinateur est décrit selon la revendication 9.

Un support de stockage est également décrit selon la revendication 10.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication selon un mode de réalisation ;
[Fig. 2] illustre schématiquement un chronogramme de relai d'un message reçu d'un premier dispositif noeud par un deuxième dispositif noeud vers un troisième dispositif noeud dans l'état de la technique ;
[Fig. 3a] illustre schématiquement un procédé de relai d'un message reçu d'un premier dispositif noeud par un deuxième dispositif noeud vers un troisième dispositif noeud selon la présente invention ;
[Fig. 3b] illustre schématiquement un procédé de transmission d'un message par un premier dispositif noeud selon la présente invention ;
[Fig. 4] illustre schématiquement un chronogramme de relai d'un message reçu d'un premier dispositif noeud par un deuxième dispositif noeud vers un troisième dispositif noeud si le troisième dispositif noeud est apte à émettre et recevoir dans une bande fréquentielle différente de la première bande fréquentielle;
[Fig. 5] illustre schématiquement les différentes couches d'un modèle OSI dans le cas particulier de de la norme G3-PLC ;
[Fig. 6] illustre schématiquement un exemple d'architecture matérielle d'un dispositif noeud du réseau de communication selon un mode de réalisation.

### EXPOSE DETAILLE DE MODES DE REALISATION

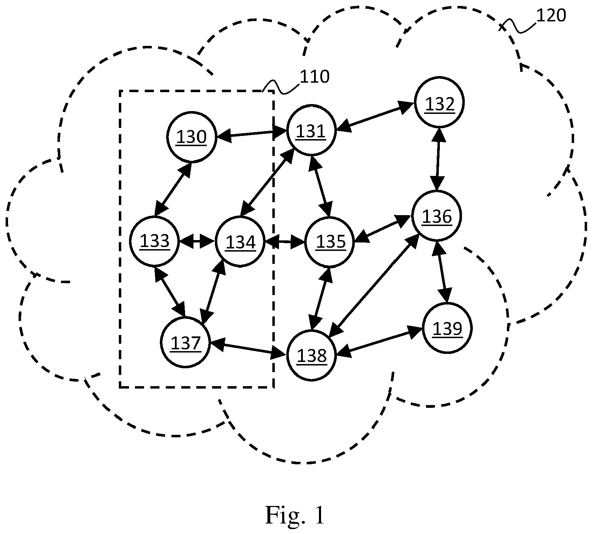

La **Fig. 1** illustre schématiquement un réseau de communication 120. Le réseau de communication 120 s'appuie sur des communications par courants porteurs en ligne PLC et/ou par radio fréquences. Le réseau de communication est par exemple un réseau d'alimentation électrique de type AMM permettant à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont des dispositifs noeuds du réseau de communication 120. Le réseau de communication 120 peut comporter d'autres dispositifs noeuds, par exemple installés au niveau de transformateurs électriques. Ainsi, le réseau de communication 120 a une structure maillée, telle que représentée schématiquement sur la Fig. 1 grâce à des flèches, où des dispositifs noeuds jouent le rôle de relai pour augmenter la portée des communications dans le réseau de communication 120, comme détaillé ci-après. Ainsi, un même compteur électrique intelligent dispose potentiellement de plusieurs chemins pour atteindre le concentrateur de données, et vice versa.

La présente invention est ainsi particulièrement adaptée au contexte de la technologie G3-PLC et/ou G3-PLC hybrid RF (marques déposées).

Le réseau de communication 120 comporte ainsi une pluralité de dispositifs noeuds 130, 131, 132, 133, 134, 135, 136, 137, 138, 139. A chaque dispositif noeud du réseau de communication 120 est associé un voisinage réseau. Sur la Fig. 1, le dispositif noeud 133 est associé à un voisinage réseau 110 englobant les dispositifs noeuds 130, 134 et 137. En effet, dans le réseau de communication 120, un signal ou un message diffusé par un dispositif noeud (tel que le dispositif noeud 133) n'est en général pas visible en tout point dudit réseau de communication. Chaque dispositif noeud émetteur de signaux ou de messages dispose alors d'un voisinage réseau, c'est-à-dire d'un sous-ensemble dudit réseau de communication 120 dans lequel tout dispositif noeud peut recevoir de manière intelligible lesdits signaux ou messages directement en provenance du dispositif noeud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source desdits signaux et aussi potentiellement en fonction de caractéristiques du canal de communication (atténuation, bruit, impédance...).

Le réseau de communication 120 s'appuie sur un protocole de routage de type réactif, tel que le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication 120. Pour découvrir une route appropriée dans le réseau de communication 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite la requête si ledit dispositif noeud en question n'est pas le dispositif noeud destination. Par diffusion de proche en proche, plusieurs requêtes de découverte de route sont typiquement reçues par le dispositif noeud destination, chacune de ces requêtes de découverte de route ayant suivi une route différente dans le réseau de communication 120.

Chaque dispositif noeud qui est à l'origine d'un message, comme par exemple une requête de découverte de route, y inclut un identifiant qui lui est propre, ainsi qu'un numéro de séquence, tel que défini dans le protocole LOADng. Ce numéro de séquence est une valeur de compteur propre à chaque dispositif noeud du réseau de communication 120. A chaque fois qu'un dispositif noeud génère un nouveau message, ledit dispositif noeud incrémente son compteur et inclut dans le message en question la valeur dudit compteur. Ainsi, lorsqu'un dispositif noeud reçoit un message, ledit dispositif noeud analyse l'identifiant du dispositif noeud à l'origine du message et le numéro de séquence inclus dans le message, et peut déterminer si le message reçu est effectivement un nouveau message ou un message déjà reçu.

Chaque dispositif noeud peut toutefois décider de ne pas relayer la requête de découverte de route, lorsqu'un ou plusieurs critères ne sont pas remplis. Notamment, avant de décider de relayer ladite requête, le dispositif noeud en question vérifie typiquement si ladite requête comporte une information représentative d'un coût de route, depuis le dispositif noeud source jusqu'au dispositif noeud en question, qui est meilleur que le coût de route représenté par une information contenue dans e ladite requête de découverte de route précédemment reçue par le dispositif noeud en question. En d'autres termes, le dispositif noeud en question relaie, par diffusion, ladite requête si ladite requête concerne une route qui a suivi, depuis le dispositif noeud source jusqu'au dispositif noeud en question, un trajet de plus faible coût que tout autre requête précédemment reçue par le dispositif noeud en question (donc pour la même découverte de route).

Le coût d'une route peut s'appuyer sur une ou plusieurs métriques. Par exemple, le coût de route est un nombre de sauts (« hops » en anglais) subis par la requête en question depuis le dispositif noeud source. Selon un autre exemple, le coût de route est le résultat d'un calcul qui dépend de la bande passante des liens franchis par la requête en question depuis le dispositif noeud source. Selon encore un autre exemple, le coût de route est proportionnel à la latence subie par la requête depuis le dispositif noeud source. D'autres métriques peuvent être utilisées pour établir un coût de route, c'est-à-dire un coût de transit, depuis le dispositif noeud source jusqu'au dispositif noeud destination.

Lorsqu'un dispositif noeud décide de relayer, par diffusion, une requête de découverte de route, le dispositif noeud en question met à jour l'information de coût de route contenue dans ladite requête, de manière à prendre en compte que ladite requête est passée par le dispositif noeud en question. Ainsi, selon un tel principe, plusieurs requêtes de découverte de route parviennent typiquement au dispositif noeud destination, chacune comportant une information de coût de route que ladite requête a suivi pour être propagée depuis le dispositif noeud source jusqu'au dispositif noeud destination. Le trajet emprunté par ladite requête de découverte de route associée au meilleur coût de route est ensuite sélectionné pour permettre au dispositif noeud source de transmettre des données au dispositif noeud destination. Pour activer la route en question le dispositif noeud destination transmet une réponse de découverte de route, appelée RREP (« Route ReSPonse » en anglais). Cette réponse de découverte de route est transmise de proche en proche en suivant le chemin inverse de la requête de découverte de route qui était associée au meilleur coût de route. Chaque dispositif noeud recevant la réponse de découverte de route met à jour une table de routage interne, au niveau de la couche liaison (« link layer » en anglais) du modèle ISO (« International Standard Organization » en anglais), afin d'y indiquer que tout message ultérieur transmis en mode point-à-point (« unicast » en anglais) depuis le dispositif noeud source en question vers le dispositif noeud destination en question doit être transmis ou relayé vers tel ou tel dispositif noeud de son voisinage réseau. Au sein de la couche liaison, aussi appelée couche MAC (« Medium Access Control » en anglais), les tables de routage sont préférentiellement implémentées dans une sous-couche d'adaptation en charge de la mise en oeuvre du protocole de routage dans le réseau de communication. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre du standard IEEE 802.15.4 et qui a été étendu à la technologie G3-PLC et G3-PLC hybrid RF (marques déposées). A noter que le protocole 6LoWPAN s'appuie lui-même sur le protocole de routage de type réactif LOADng susmentionné.

Pour communiquer entre dispositifs noeuds voisins (c'est-à-dire des dispositifs noeuds qui sont dans le voisinage réseau l'un de l'autre), les messages sont transmis sous forme de trames modulées. Plusieurs bandes fréquentielles ont été définies pour supporter la transmission de ces trames modulées, un schéma de modulation adapté étant associé à chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuses de type OFDM (« Orthogonal Frequency Division Mutliplex » en anglais).

En termes de bandes fréquentielles utilisables dans le cadre de la mise en oeuvre du réseau de communication 120, on peut citer : la bande fréquentielle CENELEC A, qui va d'approximativement 35 kHz à 91 kHz ; la bande fréquentielle FCC, qui va approximativement de 150 kHz à 480 kHz ; la bande fréquentielle ARIB, qui va aussi approximativement de 150 kHz à 400 kHz ; la bande fréquentielle CENELEC B, qui va approximativement de 98 kHz à 122 kHz et le canal RF de G3-PLC hybrid RF. Il est alors possible d'utiliser : un premier schéma de modulation à trente-six porteuses dans la bande fréquentielle CENELEC A ; un deuxième schéma de modulation à soixante-douze porteuses dans la bande fréquentielle FCC ; un troisième schéma de modulation à cinquante-quatre porteuses dans la bande fréquentielle ARIB ; un quatrième schéma de modulation à seize porteuses dans la bande fréquentielle CENELEC B et un cinquième schéma de modulation pour le canal RF de G3-PLC hybrid RF.

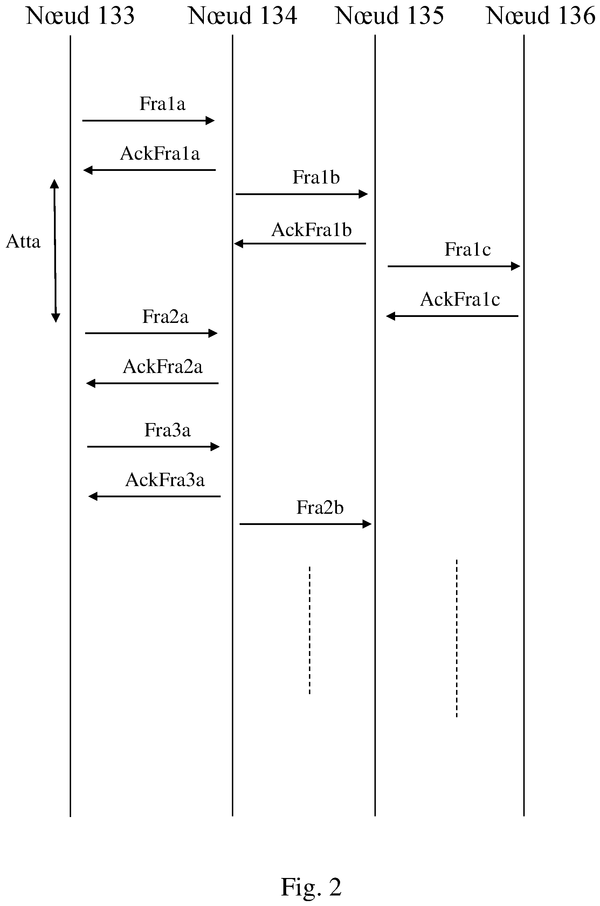

La **Fig. 2** illustre schématiquement un chronogramme de relai d'un message reçu d'un premier dispositif noeud par un deuxième dispositif noeud vers un troisième dispositif noeud dans l'état de la technique.

Dans l'état de la technique, une unique bande fréquentielle est utilisée pour une zone géographique donnée.

Lorsque le dispositif noeud 133 doit transmettre un message au dispositif noeud 136, le message est relayé par les dispositifs noeuds 134 et 135.

Le message est par exemple encapsulé dans un paquet IP, e.g. un paquet IPv6, et est fragmenté en trois fragments Fra1a, Fra2b et Fra3a afin de l'adapter aux contraintes de la couche MAC, notamment à la taille des trames MAC.

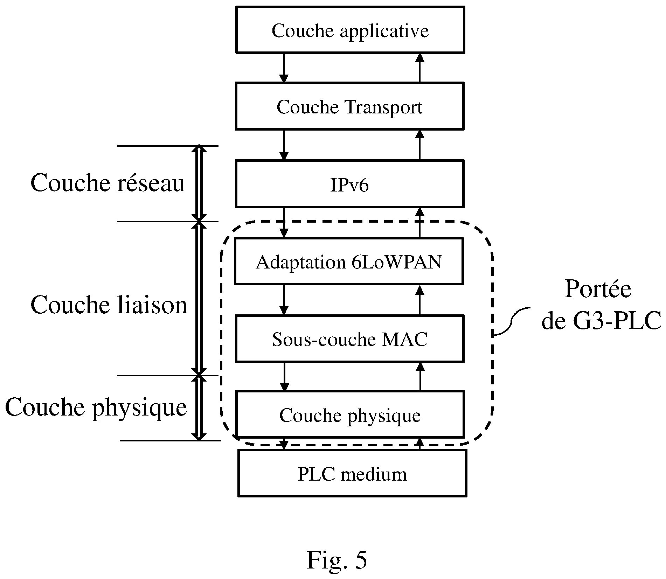

A cet effet, les normes G3-PLC et G3-PLC hybrid RF incorporent le protocole 6LoWPAN, lequel permet d'adapter des paquets de données IPv6 aux contraintes de G3-PLC et G3-PLC hybrid RF, notamment en les fragmentant. En effet, les trames MAC utilisées par G3-PLC et G3-PLC hybrid RF sont de tailles bien inférieures aux paquets IPv6 de 1400 octets. La couche adaptation de 6LoWPAN se situe entre la couche réseau et la sous-couche MAC du modèle OSI comme illustré sur la Fig. 5. Elle reçoit de la couche réseau des paquets IPv6 de 1400 octets et le cas échéant les fragmente. Bien entendu, dans le cas d'un paquet IPv6 suffisamment petit pour être contenu dans une seule trame MAC G3-PLC ou G3-PLC hybrid RF, aucune fragmentation n'est effectuée. Le procédé s'applique donc au cas où le message est suffisamment long pour devoir être fragmenté.

Chaque fragment est généralement précédé d'un en-tête de fragmentation qui contient un identifiant du fragment, la taille du paquet IP avant fragmentation, un identifiant commun à tous les fragments d'un même paquet IP et un identifiant de position du fragment dans le paquet IP (uniquement présent dans les fragments suivant le premier).

La fragmentation est notamment décrite dans la section 5.3 de la recommandation RFC 4944 (publiée en septembre 2007).

Le dispositif noeud 133 émet ainsi le premier fragment Fr1a au dispositif noeud 134 qui, si le fragment est correctement reçu et décodé, émet un message d'acquittement AckFra1a au dispositif noeud 133.

Dans l'exemple de la Fig. 2, le dispositif noeud 134 émet ensuite le fragment Fr1a dans l'unique bande fréquentielle de la zone géographique vers le dispositif noeud 135 qui, si le fragment est correctement reçu et décodé, émet un message d'acquittement noté AckFra1b au dispositif noeud 134. Le fragment Frala relayé est noté Fra1b.

Dans l'exemple de la Fig. 2, le dispositif noeud 135 émet ensuite le fragment Fr1a dans l'unique bande fréquentielle de la zone géographique vers le dispositif noeud 136 qui, si le fragment est correctement reçu et décodé, émet un message d'acquittement noté AckFra1c au dispositif noeud 134. Le fragment Frala relayé par le dispositif noeud 136 est noté Fralc. L'unique bande fréquentielle étant occupée par les fragments Fralb, Fralc et les acquittements AckFralb et AckFralc, le dispositif noeud 133 doit attendre une durée notée Atta pour pouvoir émettre le deuxième fragment Fr2a.

Le dispositif noeud 133 émet ensuite le deuxième fragment Fr2a au dispositif noeud 134 qui, si le fragment est correctement reçu et décodé, émet un message d'acquittement AckFra2a au dispositif noeud 133.

Dans l'exemple de la Fig. 2, le dispositif noeud 133 émet ensuite le troisième fragment Fr3a au dispositif noeud 134 qui, si le fragment est correctement reçu et décodé, émet un message d'acquittement AckFra3a au dispositif noeud 133.

L'unique bande fréquentielle étant occupée par le fragment Fra3a, le dispositif noeud 134 doit attendre pour pouvoir relayer le fragment Fr2a.

Ainsi, une latence non négligeable est ainsi introduite dans le réseau de communication du fait de l'occupation de l'unique bande fréquentielle.

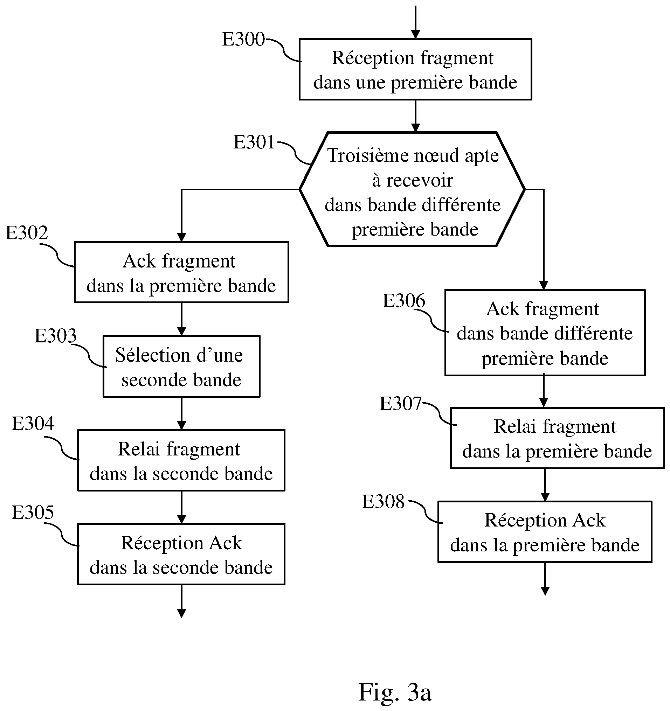

La **Fig. 3a** illustre schématiquement un procédé de relai d'un message reçu d'un premier dispositif noeud par un deuxième dispositif noeud vers un troisième dispositif noeud selon la présente invention.

Selon la présente invention, au moins deux bandes fréquentielles sont utilisées pour une même zone géographique donnée.

Le présent algorithme est exécuté par chaque dispositif noeud du réseau de communication. Le présent algorithme sera décrit dans un exemple dans lequel il est exécuté par le deuxième dispositif noeud 134, le premier dispositif noeud étant le dispositif noeud 133 et le troisième dispositif noeud étant le dispositif noeud 135.

A l'étape E300, le dispositif noeud 134 reçoit du dispositif noeud 133 un fragment dans une première bande fréquentielle.

La transmission d'un fragment sur le médium, i.e. sur la ligne de courant, comprend classiquement différentes étapes notamment une segmentation des fragments afin de les adapter à la couche physique et une modulation OFDM du signal. La segmentation consiste à partitionner une trame MAC (acronyme anglais de « Media Access Control ») en PSDUs (acronyme anglais de « PHY Service Data Unit »). Tous les PSDU issu d'un même fragment sont modulés en utilisant un même schéma de modulation.

A l'étape E301, le dispositif noeud 134 vérifie si le troisième dispositif noeud 135 est apte à émettre et recevoir dans une bande fréquentielle différente de la première bande fréquentielle. Dans l'affirmative, le dispositif noeud 134 passe à l'étape E302. Dans la négative, le dispositif noeud 134 passe à l'étape E306.

A l'étape E302, le dispositif noeud 134, après démodulation et décodage du fragment reçu selon le schéma de démodulation et de décodage de la première bande fréquentielle, émet un message d'acquittement au dispositif noeud 133 dans la première bande fréquentielle. A l'étape E303, le dispositif noeud 134 sélectionne, parmi l'ensemble des bandes fréquentielles, une deuxième bande fréquentielle différente de la première bande fréquentielle et qui est une bande fréquentielle sur laquelle le troisième dispositif noeud est apte à émettre et recevoir des messages.

A l'étape E304, le dispositif noeud 134 relaie, après une modulation et un codage du fragment décodé et démodulé selon le schéma de codage et de modulation de la bande fréquentielle sélectionnée, le fragment reçu au dispositif noeud 135.

A l'étape E305, le dispositif noeud 134 reçoit un message d'acquittement du dispositif noeud 135.

A l'étape E306, le dispositif noeud 134, après démodulation et décodage du fragment reçu selon le schéma de démodulation et de décodage de la première bande fréquentielle, émet un message d'acquittement au dispositif noeud 133 dans une bande fréquentielle différente de la première bande fréquentielle.

A l'étape E307, le dispositif noeud 134 relaie, après une modulation et un codage du fragment décodé et démodulé selon le schéma de codage et de modulation de la première bande fréquentielle, le fragment reçu au dispositif noeud 135 dans la première bande fréquentielle.

A l'étape E308, le dispositif noeud 134 reçoit un message d'acquittement du dispositif noeud 135 dans la première bande fréquentielle.

Le dispositif noeud retourne à l'étape E300 et attend la réception d'un nouveau fragment. Chaque fragment suivant sera reçu par le deuxième dispositif noeud dans une autre bande fréquentielle qui est différente de la première bande fréquentielle.

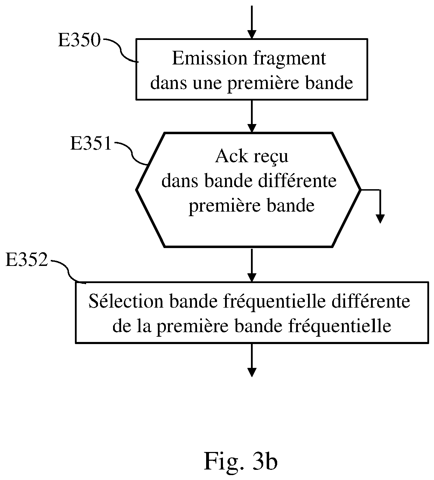

**Fig. 3b** illustre schématiquement un procédé de transmission d'un message par un premier dispositif noeud selon la présente invention.

Le présent algorithme est décrit dans un exemple dans lequel il est exécuté par le deuxième dispositif noeud 134, le premier dispositif noeud étant le dispositif noeud 133 et le troisième dispositif noeud étant le dispositif noeud 135.

A l'étape E350, le dispositif noeud 133 émet vers le dispositif noeud 134 un fragment dans une première bande fréquentielle.

A l'étape E351, le dispositif noeud 133 vérifie si un message d'acquittement est reçu du dispositif noeud 134 dans une bande fréquentielle différente de la première bande fréquentielle.

A l'étape E352, le dispositif noeud 133 sélectionne pour chaque fragment suivant qui sera émis vers le deuxième dispositif noeud, une autre bande fréquentielle qui est différente de la première bande fréquentielle.

Ceci permet de réduire la latence de la transmission de message même si le troisième dispositif noeud 135 n'est pas apte à émettre et recevoir dans une bande fréquentielle différente de la première bande fréquentielle.

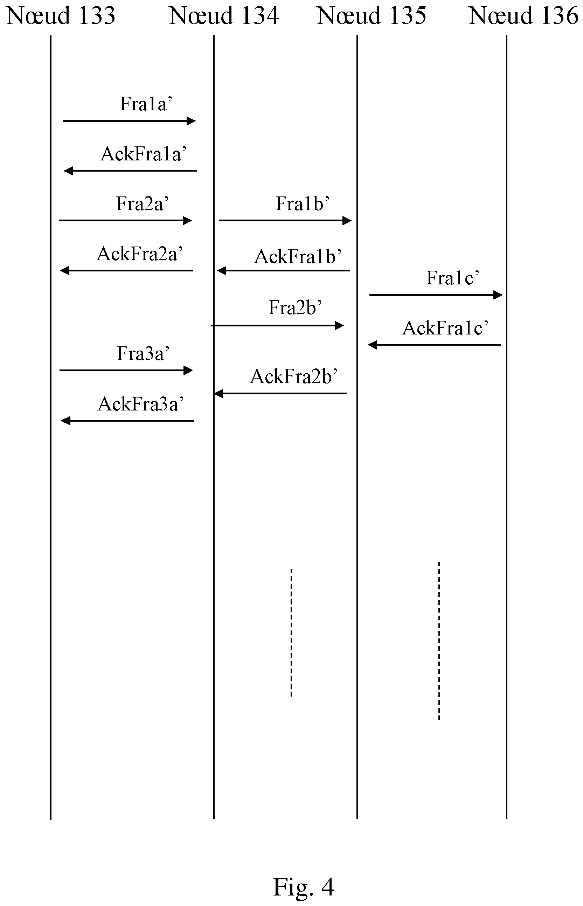

La **Fig. 4** illustre schématiquement un chronogramme de relai d'un message reçu d'un premier dispositif noeud par un deuxième dispositif noeud vers un troisième dispositif noeud si le troisième dispositif noeud est apte à émettre et recevoir dans une bande fréquentielle différente de la première bande fréquentielle.

Selon la présente invention, au moins deux bandes fréquentielles sont utilisées pour une même zone géographique donnée.

Lorsque le dispositif noeud 133 doit transmettre un message au dispositif noeud 136, le message est relayé par les dispositifs noeuds 134 et 135.

Le message est par exemple encapsulé dans un paquet IP, e.g. un paquet IPv6, et est fragmenté en trois fragments Fra1a', Fra2b' et Fra3a'.

Le dispositif noeud 133 émet, dans une première bande fréquence, le premier fragment Fr1a' au dispositif noeud 134 qui, si le fragment est correctement reçu et décodé, émet un message d'acquittement AckFra1a' au dispositif noeud 133 dans la première bande fréquentielle.

Le dispositif noeud 133 émet, dans la première bande fréquence, le deuxième fragment Fr2a' au dispositif noeud 134 qui, si le fragment est correctement reçu et décodé, émet un message d'acquittement AckFra1a' au dispositif noeud 133 dans la première bande fréquentielle.

En parallèle, le dispositif noeud 134 émet le fragment Fr1a' dans la deuxième bande fréquentielle vers le dispositif noeud 135 qui, si le fragment est correctement reçu et décodé, émet un message d'acquittement noté AckFralb' au dispositif noeud 134. Le fragment Fra1'a relayé est noté Fra1b'.

Le dispositif noeud 135 relaie, dans une bande fréquentielle différente de la deuxième bande fréquentielle, par exemple la première, ou une troisième bande fréquentielle, le premier fragment Fr1b' au dispositif noeud 136 qui, si le fragment est correctement reçu et décodé, émet un message d'acquittement AckFralc' au dispositif noeud 135 dans la bande fréquentielle différente de la deuxième bande fréquentielle. Le fragment Fra1b' relayé est noté Fra1c'.

La deuxième bande fréquentielle étant libre, le dispositif noeud 134 relaie le fragment Fr2a' dans la deuxième bande fréquentielle vers le dispositif noeud 135 qui, si le fragment est correctement reçu et décodé, émet un message d'acquittement noté AckFra2b' au dispositif noeud 134. Le fragment Fra2a' relayé est noté Fra2b'.

Après l'émission du fragment Fralc' et de l'acquittement AckFralc', le dispositif noeud 133 émet le fragment Fr3a' dans la première bande fréquentielle vers le dispositif noeud 134 qui, si le fragment est correctement reçu et décodé, émet un message d'acquittement noté AckFra3a' au dispositif noeud 133.

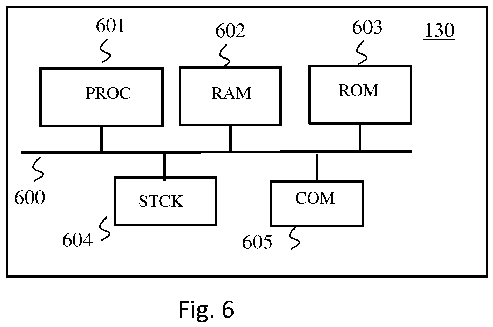

La **Fig. 6** illustre schématiquement un exemple d'architecture matérielle d'un dispositif noeud du réseau de communication 120 selon un mode de réalisation. Un tel dispositif noeud est qualifié de multi-bandes car capable de transmettre un message sur plusieurs bandes fréquentielles. On note que la Fig. 6 pourrait aussi illustrer schématiquement un exemple d'architecture matérielle d'un module de traitement compris dans le dispositif noeud.

Selon l'exemple d'architecture matérielle représenté à la Fig. 6, le dispositif noeud 130 comprend alors, reliés par un bus de communication 600 : un processeur ou CPU (« Central Processing Unit » en anglais) 601 ; une mémoire vive RAM (« Random Access Memory » en anglais) 602 ; une mémoire morte ROM (« Read Only Memory » en anglais) 603 ; une unité de stockage telle qu'un disque dur (ou un lecteur de support de stockage, tel qu'un lecteur de cartes SD (« Secure Digital » en anglais) 604 ; au moins une interface de communication 605 permettant au dispositif noeud 130 de communiquer avec les dispositifs noeuds appartenant à son voisinage, e.g. les noeuds 131 et 133.

Le processeur 601 est capable d'exécuter des instructions chargées dans la RAM 602 à partir de la ROM 603, d'une mémoire externe (non représentée), d'un support de stockage (tel qu'une carte SD), ou d'un réseau de communication. Lorsque le dispositif noeud est mis sous tension, le processeur 601 est capable de lire de la RAM 602 des instructions et de les exécuter. Ces instructions forment un programme d'ordinateur causant la mise en oeuvre, par le processeur 601, de tout ou partie du procédé décrit ci-après en relation avec les Figs. 3a et 3b.

Le procédé décrit ci-après en relation avec les Figs. 3a et 3b peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud 130 comprend de la circuiterie électronique configurée pour mettre en oeuvre les procédés décrits en relation avec les Figs. 3a et 3b.

## Revendications

1. Procédé de relai d'un message fragmenté en fragments reçu d'un premier dispositif noeud par un deuxième dispositif noeud vers un troisième dispositif noeud, lesdits dispositifs noeud appartenant à un réseau d'alimentation électrique utilisant des communications par courants porteurs en ligne et/ou par radio fréquences, le deuxième dispositif noeud étant apte à émettre et recevoir des messages sur au moins deux bandes fréquentielles d'un ensemble de bandes fréquentielles, le procédé comportant les étapes de :
- réception (E300), par le deuxième dispositif noeud, d'un premier fragment du message dans une première bande fréquentielle,
- vérification (E301), par le deuxième dispositif noeud si le troisième dispositif noeud est apte à émettre et recevoir dans une bande fréquentielle différente de la première bande fréquentielle,
- sélection (E303), par le deuxième dispositif noeud, d'une bande fréquentielle parmi l'ensemble des bandes fréquentielles qui est différente de la première bande fréquentielle- si le troisième dispositif noeud est apte à émettre et recevoir dans une bande fréquentielle différente de la première bande fréquentielle ,
- relai (E304), par le deuxième dispositif noeud, du premier fragment dans la bande fréquentielle sélectionnée vers le troisième dispositif noeud,
- si le troisième dispositif noeud n'est pas apte à émettre et recevoir dans une bande fréquentielle différente de la première bande fréquentielle :
- relai (E307), par le deuxième dispositif noeud, du premier fragment dans la première bande fréquentielle sélectionnée vers le troisième dispositif noeud,
- réception de chaque fragment suivant le premier fragment par le deuxième dispositif noeud dans une autre bande fréquentielle qui est différente de la première bande fréquentielle et transfert de chaque fragment dans la première bande fréquentielle,
- transfert d'un acquittement du premier fragment dans une bande fréquentielle différente de la première bande fréquentielle si le fragment est correctement décodé par le second dispositif noeud.

2. Procédé de transmission selon la revendication 1, **caractérisé en ce que**, si le troisième dispositif noeud est apte à émettre et recevoir dans une bande fréquentielle différente de la première bande fréquentielle, chaque fragment suivant le premier fragment est reçu par le deuxième dispositif noeud dans la première bande fréquentielle et chaque fragment est transféré dans la bande fréquentielle sélectionnée.

3. Procédé de transmission selon l'une quelconque des revendications 1 à 2, **caractérisé en ce que** si le troisième dispositif noeud est apte à émettre et recevoir dans une bande fréquentielle différente de la première bande fréquentielle et si le fragment est correctement décodé par le second dispositif noeud, le procédé comporte en outre une étape de transfert d'un acquittement du fragment dans la première bande fréquentielle.

4. Procédé selon la revendication 3, **caractérisé en ce que** si le troisième dispositif noeud est apte à émettre et recevoir dans une bande fréquentielle différente de la première bande fréquentielle, préalablement à l'étape de relai du fragment, le fragment reçu est démodulé et décodé selon le schéma de modulation de la première bande fréquentielle et est modulé et codé selon le schéma de codage et de modulation de la bande fréquentielle sélectionnée.

5. Procédé selon la revendication 1, **caractérisé en ce que** si le troisième dispositif noeud n'est pas apte à émettre et recevoir dans une bande fréquentielle différente de la première bande fréquentielle, préalablement à l'étape de relai du fragment, le fragment reçu est démodulé et décodé selon le schéma de modulation de la première bande fréquentielle et est modulé et codé selon le schéma de codage et de modulation de la première bande fréquentielle.

6. Le procédé selon l'une des revendications 1 à 5, dans lequel ledit message est fragmenté conformément au protocole 6LowPAN.

7. Procédé selon l'une des revendications 1 à 6, dans lequel ledit ensemble de bandes fréquentielles comprend :
la bande fréquentielle CENELEC A;
la bande fréquentielle CENELEC B;
la bande fréquentielle FCC ou la bande fréquentielle ARIB; et
le canal RF de G3-PLC hybrid RF.

8. Dispositif de relai d'un message fragmenté en fragments reçu d'un premier dispositif noeud par un deuxième dispositif noeud vers un troisième dispositif noeud, lesdits dispositifs noeuds appartenant à un réseau d'alimentation électrique utilisant des communications par courants porteurs en ligne et/ou par radio fréquences, le deuxième dispositif noeud étant apte à émettre et recevoir des messages sur au moins deux bandes fréquentielles d'un ensemble de bandes fréquentielles, et le dispositif étant compris dans le deuxième dispositif noeud et comportant:
- des moyens de réception, par le deuxième dispositif noeud, d'un premier fragment du message dans une première bande fréquentielle,
- des moyens de vérification, par le deuxième dispositif noeud, si le troisième dispositif noeud est apte à émettre et recevoir dans une bande fréquentielle différente de la première bande fréquentielle,
- des moyens de sélection, par le deuxième dispositif noeud, d'une bande fréquentielle parmi l'ensemble des bandes fréquentielles qui est différente de la première bande fréquentielle si le troisième dispositif noeud est apte à émettre et recevoir dans une bande fréquentielle différente de la première bande fréquentielle,
- des moyens de relai, par le deuxième dispositif noeud, du premier fragment dans la bande fréquentielle sélectionnée vers le troisième dispositif noeud,
- des moyens de relai, par le deuxième dispositif noeud, du premier fragment dans la première bande fréquentielle sélectionnée vers le troisième dispositif noeud si le troisième dispositif noeud n'est pas apte à émettre et recevoir dans une bande fréquentielle différente de la première bande fréquentielle,
- des moyens de réception de chaque fragment suivant le premier fragment par le deuxième dispositif noeud dans une autre bande fréquentielle qui est différente de la première bande fréquentielle et transfert de chaque fragment dans la première bande fréquentielle si le troisième dispositif noeud n'est pas apte à émettre et recevoir dans une bande fréquentielle différente de la première bande fréquentielle,
- des moyens de transfert d'un acquittement du premier fragment dans une bande fréquentielle différente de la première bande fréquentielle si le fragment est correctement décodé par le second dispositif noeud si le troisième dispositif noeud n'est pas apte à émettre et recevoir dans une bande fréquentielle différente de la première bande fréquentielle.

9. Un produit programme d'ordinateur **caractérisé en ce qu'**il comprend des instructions pour implémenter, par un dispositif noeud, le procédé selon l'une quelconque des revendications 1 à 7, lorsque ledit programme est exécuté par un processeur du dispositif noeud.

10. Un support de stockage **caractérisé en ce qu'**il stocke un programme d'ordinateur comprenant des instructions pour implémenter, par un dispositif noeud, le procédé selon l'une quelconque des revendications 1 à 7, lorsque ledit programme est exécuté par un processeur du dispositif noeud.

## Patentansprüche

1. Verfahren zur Weiterleitung einer von einer ersten Knotenvorrichtung empfangenen, in Fragmente fragmentierten Nachricht durch eine zweite Knotenvorrichtung an eine dritte Knotenvorrichtung, wobei die Knotenvorrichtungen zu einem elektrischen Versorgungsnetz gehören, das Powerline- und/oder Funkfrequenzkommunikationen verwendet, wobei die zweite Knotenvorrichtung geeignet ist, Nachrichten auf mindestens zwei Frequenzbändern einer Einheit von Frequenzbändern zu senden und zu empfangen, und das Verfahren die folgenden Schritte aufweist:
- Empfang (E300), durch die zweite Knotenvorrichtung, eines ersten Fragments der Nachricht in einem ersten Frequenzband,
- Überprüfung (E301), durch die zweite Knotenvorrichtung, ob die dritte Knotenvorrichtung geeignet ist, in einem sich vom ersten Frequenzband unterscheidenden Frequenzband zu senden und zu empfangen,
- Auswahl (E303), durch die zweite Knotenvorrichtung, eines Frequenzbands aus der Einheit von Frequenzbändern, das sich vom ersten Frequenzband unterscheidet, wenn die dritte Knotenvorrichtung geeignet ist, in einem sich vom ersten Frequenzband unterscheidenden Frequenzband zu senden und zu empfangen,
- Weiterleitung (E304), durch die zweite Knotenvorrichtung, des ersten Fragments im ausgewählten Frequenzband an die dritte Knotenvorrichtung,
- wenn die dritte Knotenvorrichtung nicht geeignet ist, in einem sich vom ersten Frequenzband unterscheidenden Frequenzband zu senden und zu empfangen:
- Weiterleitung (E307), durch die zweite Knotenvorrichtung, des ersten Fragments im ausgewählten ersten Frequenzband an die dritte Knotenvorrichtung,
- Empfang jedes auf das erste Fragment folgenden Fragments durch die zweite Knotenvorrichtung in einem anderen Frequenzband, das sich vom ersten Frequenzband unterscheidet, und Übertragung jedes Fragments im ersten Frequenzband,
- Übertragung einer Bestätigung des ersten Fragments in einem sich vom ersten Frequenzband unterscheidenden Frequenzband, wenn das Fragment von der zweiten Knotenvorrichtung korrekt decodiert wird.

2. Übertragungsverfahren nach Anspruch l, **dadurch gekennzeichnet, dass**, wenn die dritte Knotenvorrichtung geeignet ist, in einem sich vom ersten Frequenzband unterscheidenden Frequenzband zu senden und zu empfangen, jedes auf das erste Fragment folgende Fragment von der zweiten Knotenvorrichtung im ersten Frequenzband empfangen wird, und jedes Fragment im ausgewählten Frequenzband übertragen wird.

3. Übertragungsverfahren nach einem der Ansprüche 1 bis 2, **dadurch gekennzeichnet, dass**, wenn die dritte Knotenvorrichtung geeignet ist, in einem sich vom ersten Frequenzband unterscheidenden Frequenzband zu senden und zu empfangen, und wenn das Fragment von der zweiten Knotenvorrichtung korrekt decodiert wird, das Verfahren außerdem einen Schritt der Übertragung einer Bestätigung des Fragments im ersten Frequenzband aufweist.

4. Verfahren nach Anspruch 3, **dadurch gekennzeichnet, dass**, wenn die dritte Knotenvorrichtung geeignet ist, in einem sich vom ersten Frequenzband unterscheidenden Frequenzband zu senden und zu empfangen, vor dem Schritt der Weiterleitung des Fragments, das empfangene Fragment gemäß dem Modulationsschema des ersten Frequenzbands demoduliert und decodiert wird und gemäß dem Codier- und Modulationsschema des ausgewählten Frequenzbands moduliert und codiert wird.

5. Verfahren nach Anspruch 1, **dadurch gekennzeichnet, dass**, wenn die dritte Knotenvorrichtung nicht geeignet ist, in einem sich vom ersten Frequenzband unterscheidenden Frequenzband zu senden und zu empfangen, vor dem Schritt der Weiterleitung des Fragments, das empfangene Fragment gemäß dem Modulationsschema des ersten Frequenzbands demoduliert und decodiert wird und gemäß dem Codier- und Modulationsschema des ersten Frequenzbands moduliert und codiert wird.

6. Verfahren nach einem der Ansprüche 1 bis 5, wobei die Nachricht gemäß dem Protokoll 6LowPAN fragmentiert wird.

7. Verfahren nach einem der Ansprüche 1 bis 6, wobei die Einheit von Frequenzbändern enthält:
das Frequenzband CENELEC A;
das Frequenzband CENELEC B;
das Frequenzband FCC oder das Frequenzband ARIB; und
den Kanal RF von G3-PLC hybrid RF.

8. Vorrichtung zur Weiterleitung einer von einer ersten Knotenvorrichtung empfangenen, in Fragmente fragmentierten Nachricht durch eine zweite Knotenvorrichtung an eine dritte Knotenvorrichtung, wobei die Knotenvorrichtungen zu einem elektrischen Versorgungsnetz gehören, das Powerline- und/oder Funkfrequenzkommunikationen verwendet, wobei die zweite Knotenvorrichtung geeignet ist, Nachrichten auf mindestens zwei Frequenzbändern einer Einheit von Frequenzbändern zu senden und zu empfangen, wobei die Vorrichtung in der zweiten Knotenvorrichtung enthalten ist und aufweist:
- Empfangseinrichtungen, durch die zweite Knotenvorrichtung, eines ersten Fragments der Nachricht in einem ersten Frequenzband,
- Überprüfungseinrichtungen, durch die zweite Knotenvorrichtung, ob die dritte Knotenvorrichtung geeignet ist, in einem sich vom ersten Frequenzband unterscheidenden Frequenzband zu senden und zu empfangen,
- Auswahleinrichtungen, durch die zweite Knotenvorrichtung, eines Frequenzbands unter der Einheit von Frequenzbändern, das sich vom ersten Frequenzband unterscheidet, wenn die dritte Knotenvorrichtung geeignet ist, in einem sich vom ersten Frequenzband unterscheidenden Frequenzband zu senden und zu empfangen,
- Einrichtungen zur Weiterleitung, durch die zweite Knotenvorrichtung, des ersten Fragments im ausgewählten Frequenzband an die dritte Knotenvorrichtung,
- Einrichtungen zur Weiterleitung, durch die zweite Knotenvorrichtung, des ersten Fragments im ausgewählten ersten Frequenzband an die dritte Knotenvorrichtung, wenn die dritte Knotenvorrichtung nicht geeignet ist, in einem sich vom ersten Frequenzband unterscheidenden Frequenzband zu senden und zu empfangen,
- Empfangseinrichtungen jedes Fragments nach dem ersten Fragment durch die zweite Knotenvorrichtung in einem anderen Frequenzband, das sich vom ersten Frequenzband unterscheidet, und Übertragung jedes Fragments im ersten Frequenzband, wenn die dritte Knotenvorrichtung nicht geeignet ist, in einem sich vom ersten Frequenzband unterscheidenden Frequenzband zu senden und zu empfangen,
- Übertragungseinrichtungen einer Bestätigung des ersten Fragments in einem sich vom ersten Frequenzband unterscheidenden Frequenzband, wenn das Fragment korrekt von der zweiten Knotenvorrichtung decodiert wird, wenn die dritte Knotenvorrichtung nicht geeignet ist, in einem sich vom ersten Frequenzband unterscheidenden Frequenzband zu senden und zu empfangen.

9. Computerprogrammprodukt, **dadurch gekennzeichnet, dass** es Anweisungen enthält, um das Verfahren nach einem der Ansprüche 1 bis 7 durch eine Knotenvorrichtung zu implementieren, wenn das Programm von einem Prozessor der Knotenvorrichtung ausgeführt wird.

10. Speicherträger, **dadurch gekennzeichnet, dass** er ein Computerprogramm speichert, das Anweisungen enthält, um das Verfahren nach einem der Ansprüche 1 bis 7 durch eine Knotenvorrichtung zu implementieren, wenn das Programm von einem Prozessor der Knotenvorrichtung ausgeführt wird.

## Claims

1. Method for relaying a message fragmented into fragments received from a first node device by a second node device to a third node device, said node devices belonging to an electrical power supply network using power line and/or radiofrequency communications, the second node device being capable of transmitting and receiving messages over at least two frequency bands of a set of frequency bands, the method comprising the steps of:
- reception (E300), by the second node device, of a first fragment of the message in a first frequency band,
- verification (E301), by the second node device, whether the third node device is capable of transmitting and receiving in a frequency band different from the first frequency band,
- selection (E303), by the second node device, of a frequency band from among the set of the frequency bands which is different from the first frequency band if the third node device is capable of transmitting and receiving in a frequency band different from the first frequency band,
- relaying (E304), by the second node device, of the first fragment in the selected frequency band to the third node device,
- if the third node device is not capable of transmitting and receiving in a frequency band different from the first frequency band:
- relaying (E307), by the second node device, of the first fragment in the selected first frequency band to the third node device,
- reception of each fragment following the first fragment by the second node device in another frequency band which is different from the first frequency band and transfer of each fragment in the first frequency band,
- transfer of an acknowledgement of the first fragment in a frequency band different from the first frequency band if the fragment is correctly decoded by the second node device.

2. Transmission method according to Claim 1, **characterized in that**, if the third node device is capable of transmitting and receiving in a frequency band different from the first frequency band, each fragment following the first fragment is received by the second node device in the first frequency band and each fragment is transferred in the selected frequency band.

3. Transmission method according to either one of Claims 1 and 2, **characterized in that** if the third node device is capable of transmitting and receiving in a frequency band different from the first frequency band and if the fragment is correctly decoded by the second node device, the method further comprises a step of transfer of an acknowledgement of the fragment in the first frequency band.

4. Method according to Claim 3, **characterized in that** if the third node device is capable of transmitting and receiving in a frequency band different from the first frequency band, prior to the step of relaying of the fragment, the fragment received is demodulated and decoded according to the modulation scheme of the first frequency band and is modulated and coded according to the coding and modulation scheme of the selected frequency band.

5. Method according to Claim 1, **characterized in that** if the third node device is not capable of transmitting and receiving in a frequency band different from the first frequency band, prior to the step of relaying of the fragment, the received fragment is demodulated and decoded according to the modulation scheme of the first frequency band and is modulated and coded according to the coding and modulation scheme of the first frequency band.

6. Method according to one of Claims 1 to 5, wherein said message is fragmented in accordance with the 6LowPAN protocol.

7. Method according to one of Claims 1 to 6, wherein said set of frequency bands comprises:
the CENELEC A frequency band;
the CENELEC B frequency band;
the FCC frequency band or the ARIB frequency band; and
the RF channel of G3-PLC hybrid RF.

8. Device for relaying a message fragmented into fragments received from a first node device by a second node device to a third node device, said node devices belonging to an electrical power supply network using power line and/or radiofrequency communications, the second node device being capable of transmitting and receiving messages over at least two frequency bands of a set of frequency bands, and the device being included in the second node device and comprising:
- means for reception, by the second node device, of a first fragment of the message in a first frequency band,
- means for verification, by the second node device, whether the third node device is capable of transmitting and receiving in a frequency band different from the first frequency band,
- means for selection, by the second node device, of a frequency band out of the set of the frequency bands which is different from the first frequency band if the third node device is capable of transmitting and receiving in a frequency band different from the first frequency band,
- means for relaying, by the second node device, of the first fragment in the selected frequency band to the third node device,
- means for relaying, by the second node device, of the first fragment in the selected first frequency band to the third node device if the third node device is not capable of transmitting and receiving in a frequency band different from the first frequency band,
- means for reception of each fragment following the first fragment by the second node device in another frequency band which is different from the first frequency band and transfer of each fragment in the first frequency band if the third node device is not capable of transmitting and receiving in a frequency band different from the first frequency band,
- means for transferring an acknowledgement of the first fragment in a frequency band different from the first frequency band if the fragment is correctly decoded by the second node device if the third node device is not capable of transmitting and receiving in a frequency band different from the first frequency band.

9. Computer program product, **characterized in that** it comprises instructions for implementing, by a node device, the method according to any one of Claims 1 to 7, when said program is run by a processor of the node device.

10. Storage medium, **characterized in that** it stores a computer program comprising instructions for implementing, by a node device, the method according to any one of Claims 1 to 7, when said program is run by a processor of the node device.
